# EUROPÄISCHE PATENTSCHRIFT

(11) **EP 3 341 617 B1**
(45) Veröffentlichungstag und Bekanntmachung des Hinweises auf die Patenterteilung: **20.05.2020**
(21) Anmeldenummer: 15757473.2
(22) Anmeldetag: 27.08.2015
(51) Int. Cl.: F16B 25/00, F16B 25/10

(54) **BOHRSCHRAUBE**
DRILLING SCREW
VIS-FORET

(43) Veröffentlichungstag der Anmeldung: 04.07.2018
(73) Patentinhaber: EJOT Baubefestigungen GmbH, 57334 Bad Laasphe (DE)
(72) Erfinder: KETTNER, Tobias, 57339 Erndtebrück-Birkelbach (DE)
(74) Vertreter: DREISS Patentanwälte PartG mbB
(86) Internationale Anmeldenummer: PCT/EP2015/069658
(87) Internationale Veröffentlichungsnummer: WO 2017/032423

(56) Entgegenhaltungen:
- WO-A1-2015/135710
- DE-A1- 2 549 147
- DE-A1-102008 052 743
- DE-C1- 4 003 374
- US-A1- 2009 175 701

## Beschreibung

Die Erfindung betrifft eine Bohrschraube, insbesondere eine Zweistahlschraube, mit einem Kopfteil und mit einem Schneidteil, wobei der Kopfteil aus einem korrosionsbeständigen Werkstoff hergestellt ist und einen Schraubenkopf und einen Schaftabschnitt aufweist und wobei der Schneidteil aus einem härtbaren oder hartem Werkstoff hergestellt ist. Aus der DE 25 49 147 A1 und der US 2009/175701 A1 sind derartige Schrauben bekannt. Die WO 2015/135710 A1, die am 17. September 2015 und somit nach dem Anmeldedatum der vorliegenden Anmeldung veröffentlicht wurde, offenbart ebenfalls eine derartige Schraube. Die DE 10 2008 052 743 A3 zeigt ein als Bohrer ausgebildetes Werkzeug zur spanabhebenden Bearbeitung. Die DE 40 03 374 C1 zeigt einen selbstbohrenden Befestiger mit einem plättchenförmigen Schneidteil.

Die Erfindung betrifft ferner ein Verfahren zum Herstellen einer Bohrschraube, insbesondere einer Zweistahlschraube umfassend einen Kopfteil aus korrosionsbeständigem Werkstoff, der einen Schraubenkopf und einen Schaftabschnitt aufweist, einen Schneidteil aus einem härtbaren oder hartem Werkstoff und einen zwischen Schaftabschnitt und Schneidteil angeordneten Zwischenabschnitt aus einem korrosionsbeständigen Werkstoff.

Bohrschrauben oder Zweistahlschrauben, sowie Verfahren zum Herstellen derartiger Bohr- oder Zweistahlschrauben sind aus dem Stand der Technik vielfach bekannt. So ist es insbesondere aus der Gebäudetechnik bekannt, Zweistahlschrauben vorzusehen, welche einen rostfreien Kopfteil für eine Gebäudeaußenseite aufweisen, sodass dieser Kopfteil keiner Korrosion beziehungsweise keinem Rost ausgesetzt ist. Ferner weisen die aus dem Stand der Technik bekannten Zweistahlschrauben am Schneidteil einen gehärteten Teil mit einer Stahlbohrspitze auf, sodass einerseits eine der Witterung ausgesetzte rostfreie Außenseite der Zweistahlschraube bereit gestellt werden kann, wohingegen der gehärtete vordere Teil eine Bohrspitze bereitstellt.

Zur Verbindung des Kopfteils mit dem Schneidteil ist es aus dem Stand der Technik bekannt, die beiden Teile zu Verkleben, die beiden Teile zu Verschweißen oder zu Verschrauben. Dabei kann vorgesehen sein, dass sowohl der Kopfteil, als auch der Schneidteil jeweils ein Innengewinde aufweisen und die beiden Teile mit einem Gewindestift verbunden sind.

Bei den aus dem Stand der Technik bekannten Zweistahlschrauben hat es sich jedoch gezeigt, dass der Kopfteil und der Schneidteil nicht immer zuverlässig miteinander verbunden werden können. Ferner ist es zum Herstellen eines Gewindes am Schaft der Zweistahlschraube erforderlich, dass Kopfteil und Schneidteil axial fluchtend zueinander angeordnet sind. Auch hier treten in der Praxis hohe Abweichungen auf. Folglich haben die aus dem Stand der Technik bekannten Zweistahlschrauben und Verfahren zum Herstellen solcher Zweistahlschrauben hohe Ausschussquoten und einen hohen Prüfaufwand zur Folge. Aus der nachveröffentlichten deutschen Patentanmeldung DE 10 2014 204 598 ist es bekannt, einen Schneidteil mit einem Kopfteil mittels Fließpressen zu verbinden. Dabei hat sich jedoch gezeigt, dass insbesondere lange Schrauben nicht wie dort beschrieben hergestellt werden können.

Die Erfindung stellt sich daher die Aufgabe, eine Bohrschraube, insbesondere eine Zweistahlschraube, sowie ein Verfahren zum Herstellen einer Bohr- oder Zweistahlschraube bereit zu stellen, wobei die genannten Probleme vermieden werden.

Die eingangs genannte Aufgabe wird mit einer Bohrschraube mit den Merkmalen des Anspruchs 1 gelöst. Weitere vorteilhafte Ausgestaltungen der Zweistahlschraube ergeben sich aus den Unteransprüchen. Demgemäß ist vorgesehen, dass zwischen Schaftabschnitt und Schneidteil ein Zwischenabschnitt aus einem korrosionsbeständigen Werkstoff angeordnet ist, der mit dem Schaftabschnitt unlösbar verbunden wird, wobei der Schneidteil einen zapfenartigen Vorsprung oder eine napfartige Aussparung aufweist und wobei der Zwischenabschnitt eine napfartige Aussparung oder einen zapfenartigen Vorsprung aufweist, wobei einer der beiden Verbindungspartner im Querschnitt ein Mitnahmeprofil aufweist, wobei der zapfenartige Vorsprung in der napfartigen Aussparung angeordnet ist und wobei der Zwischenabschnitt mit dem Schneidteil mittels Fließpressen derart dauerhaft verbunden ist, dass der zapfenartige Vorsprung des Schneidteils den Zwischenabschnitt im Bereich der napfartigen Aussparung zumindest abschnittsweise axial hinterschneidet oder dass der zapfenartige Vorsprung des Zwischenabschnitts den Schneidteil im Bereich der napfartigen Aussparung zumindest abschnittsweise axial hinterschneidet. Wenn der Schneidteil mit dem Zwischenabschnitt verbunden ist und dieser im Bereich des Schaftabschnitts mit dem Kopfteil - zum Beispiel durch Schweißen- unlösbar verbunden ist, bilden der Schaftabschnitt, der Zwischenabschnitt und der Schneidteil gemeinsam den Schraubenschaft. Auf den Schraubenschaft kann dann beispielsweise ein Gewinde aufgebracht werden.

Vorzugsweise sind der Kopfteil und der Zwischenabschnitt dabei aus Edelstahl hergestellt, wohingegen der Schneidteil vorzugsweise aus wärmebehandeltem Stahl, einem HSS, einem Hartmetall oder einer Technischen Keramik hergestellt ist. Besonders bevorzugt ist es dabei, wenn der Kopfteil mit dem Schneidteil mittels eines Querfließprozesses verbunden ist. Eine erfindungsgemäße axiale Hinterschneidung kann insbesondere durch einen Querfließprozess erreicht werden, wobei der Werkstofffluss quer zur Wirkrichtung einer Pressmaschine erfolgen kann.

Da zum Fließpressen ein vergleichsweise kurzer Zwischenabschnitt verwendet werden kann, kann einerseits eine sichere Verbindung zwischen Schneidteil und Zwischenabschnitt erreicht werden, wobei andererseits aufgrund der artgleichen Materialien von Zwischenabschnitt und Kopfteil eine zuverlässige unlösbare Verbindung zwischen dem Kopfteil und dem Zwischenabschnitt hergestellt werden kann. Eine Festlegung einer Schraubenlänge kann dann vorteilhafterweise durch die Festlegung der Länge des Schaftabschnitts des Kopfteils erfolgen.

Vorteilhafterweise erstrecken sich die Mitnahmeabschnitte in der napfartigen Aussparung oder am Zapfen radial nach innen. Durch den Fließpressprozess, beziehungsweise durch den Querfließpressprozess kann dann eine Hinterschneidung zwischen Schneidteil und Zwischenabschnitt, beziehungsweise zwischen dem zapfenartigen Vorsprung und der napfartigen Aussparung bereitgestellt werden, sodass der Zwischenabschnitt und der Schneidteil in axialer Richtung, das heißt in Richtung der Längsachse der Schraube, sicher verbunden sind.

Durch das Vorsehen des Mitnahmeprofils mit den Mitnahmeabschnitten kann ferner auch eine Drehmomentübertragung vom Kopfteil auf den Schneidteil bereitgestellt werden. Somit kann mit einer erfindungsgemäßen Bohrschraube der Kopfteil mit dem Schneidteil sowohl in axialer, als auch in radialer Richtung zuverlässig und einfach verbunden werden.

Vorteilhafterweise sind die napfartige Aussparung und der zapfenartige Vorsprung jeweils an einer senkrecht zu einer Mittellängsachse der Schraube angeordneten Stirnseite des Kopfteils beziehungsweise des Schneidteils angeordnet.

Besonders bevorzugt ist es ferner, wenn der zapfenartige Vorsprung die napfartige Aussparung vollständig ausfüllt oder das Zwischenteil den zapfenartigen Vorsprung vollständig umschließt. Somit kann bei einer erfindungsgemäßen Bohrschraube eine formschlüssige Verbindung des Zwischenabschnitts mit dem Schneidteil bereitgestellt werden.

Weiterhin ist es vorteilhaft, wenn der Schneidteil gehärtet, insbesondere einsatzgehärtet ist und eine Bohrspitze aufweist.

Besonders bevorzugt ist es dabei, wenn der Schneidteil eine Kernbohrung aufweist, die in der Bohrspitze mündet. Eine derartige Kernbohrung kann im Betrieb der Bohrschraube, d.h. beim Einschrauben in bspw. einen Blechträger als Schmierstoffreservoir genutzt werden.

Vorteilhafterweise ist der Schneidteil aus einem Schnellarbeitsstahl (HSS), einem hochlegierten - oder Kohlenstoffstahl, einem Hartmetall oder einer Technischen Keramik hergestellt.

Besonders bevorzugt ist es dabei, wenn der Kopfteil und der Zwischenabschnitt aus einem Edelstahl hergestellt sind. Vorteilhafterweise sind der Kopfteil und der Zwischenabschnitt aus demselben Edelstahl hergestellt, so dass der Kopfteil mit dem Zwischenabschnitt einfach und zuverlässig unlösbar miteinander verbunden werden kann.

Eine weitere vorteilhafte Weiterbildung der Bohrschraube sieht vor, dass das Mitnahmeprofil als Torx, Torx-Plus, Sechskant, Vielzahn, Verzahnung oder Kreuz ausgebildet ist.

In einer weiteren vorteilhaften Ausgestaltung der Bohrschraube ist vorgesehen, dass zwischen den Mitnahmeabschnitten jeweils Kreisabschnitte vorgesehen sind. Vorteilhafterweise weist das Mitnahmeprofil drei Mitnahmeabschnitte auf. Folglich weist das Mitnahmeprofil, wenn drei Mitnahmeabschnitten vorgesehen sind, auch drei Kreisabschnitte auf. Dabei können die Kreisabschnitte vorteilhafterweise radial außen an den Mitnahmeabschnitten in der napfartigen Aussparung oder am zapfenartigen Vorsprung angeordnet sein.

Weiterhin ist es vorteilhaft, wenn die Mitnahmeabschnitte und die Kreisabschnitte in einem Winkel von etwa 120 Grad zueinander im Umfang der napfartigen Aussparung oder am zapfenartigen Vorsprung angeordnet sind.

Eine weitere vorteilhafte Ausgestaltung der Zweistahlschraube sieht vor, dass die napfartige Aussparung oder der zapfenartige Vorsprung im Bereich der Kreisabschnitte einen ersten Radius und im Bereich der Mitnahmeabschnitte einen zweiten, sich verringernden Radius aufweist, der kleiner ist als der erste Radius. Insbesondere können die Mitnahmeabschnitte als umgekehrte, sich hin zur Mitte der Aussparung nach radial innen erstreckende Kreisabschnitte ausgebildet sein.

Die eingangs genannte Aufgabe wird auch gelöst durch ein Verfahren zum Herstellen einer Zweistahlschraube mit den Merkmalen des Anspruchs 8. Ein solches Verfahren umfasst die folgenden Schritte: Einpressen einer napfartigen Aussparung mit einer vorgegebenen Tiefe in den Zwischenabschnitt oder Anformen eines zapfenartigen Vorsprungs mit einer vorgegebenen Länge an den Zwischenabschnitt; Herstellen des Schneidteils mit einem zapfenartigen Vorsprung mit einer Länge, die größer ist als die Tiefe der Aussparung oder Einpressen einer napfartigen Aussparung in den Schneidteil mit einer Tiefe, die kleiner ist als die Länge des zapfenartigen Vorsprungs des Zwischenabschnitts; wobei beim Einpressen der napfartigen Aussparung ein Mitnahmeprofil mit Mitnahmeabschnitten eingepresst wird; Einführen des Vorsprungs in die Aussparung und Verbinden des Zwischenabschnitts und des Schneidteils mittels Fließpressen, so dass der zapfenartige Vorsprung die napfartige Aussparung vollständig ausformt; Verschweißen des Schaftabschnitts und des mit dem Schneidteil verbundenen Zwischenabschnitts. Besonders bevorzugt ist es dabei, wenn als Fließprozess ein Querfließprozess zum Einsatz kommt.

Die eingangs genannte Aufgabe wird auch gelöst durch ein Verfahren zum Herstellen einer Zweistahlschraube mit den Merkmalen des Anspruchs 8. Ein solches Verfahren umfasst die folgenden Schritte: Einpressen einer napfartigen Aussparung mit einer vorgegebenen Tiefe in den Zwischenabschnitt oder Anformen eines zapfenartigen Vorsprungs mit einer vorgegebenen Länge an den Zwischenabschnitt; Herstellen des Schneidteils mit einem zapfenartigen Vorsprung oder einer napfartigen Aussparung mit einem Mitnahmeprofil im Querschnitt; Einführen des Vorsprungs in die Aussparung und Verbinden des Zwischenabschnitts und des Schneidteils mittels Fließpressen, so dass der zapfenartige Vorsprung die napfartige Aussparung vollständig ausformt oder der zapfenartige Vorsprung umschlossen wird; unlösbares Verbinden des Schaftabschnitts und des mit dem Schneidteil verbundenen Zwischenabschnitts. Besonders bevorzugt ist es dabei, wenn als Fließprozess ein Querfließprozess zum Einsatz kommt.

Beim Herstellen des Schneidteils kann dieser vorteilhafterweise mit einem Fließpressverhältnis von maximal 75 % fließgepresst oder genapft werden. Nach dem Verbinden, das heißt wenn der zapfenartige Vorsprung die napfartige Aussparung vollständig ausformt oder vollständig umschlossen wird, ist es besonders bevorzugt, wenn der zapfenartige Vorsprung die napfartige Aussparung dabei zumindest abschnittsweise axial hinterschneidet. Da der zapfenartige Vorsprung vor dem Verbinden eine Länge aufweist, die größer ist als die Tiefe der napfartigen Aussparung kann der Werkstoff des Schneidteils bei dem axialen Verlagern während des Fließprozesses in radialer Richtung in die napfartige Aussparung ausweichen. Somit können bauchige, sich nach radial außen erstreckende Abschnitte am zapfenartigen Vorsprung bei einer fertig verbundenen Schraube hergestellt werden. Mit diesen bauchigen Vorsprüngen kann die Hinterschneidung bereitgestellt werden, wodurch der Kopfteil mit dem Schneidteil in axialer Richtung sicher formschlüssig verbunden ist. Weiterhin kann am zapfenartigen Vorsprung oder in der napfartigen Aussparung bereits ein Hinterschnitt angebracht sein, so dass sich während des Querfließprozesses der Werkstoff des Zwischenteils an den zapfenartigen Vorsprung oder an die Wandung der napfartigen Aussparung anlegt und somit die formschlüssige axiale Verbindung herstellt.

Eine vorteilhafte Weiterbildung des Verfahrens sieht vor, dass die napfartige Aussparung in einem Flächenverhältnis von etwa 20 % bis etwa 75 % zu einer Querschnittsfläche des Zwischenabschnitts in den Zwischenabschnitt oder in den Schneidteil eingepresst wird. Es hat sich gezeigt, dass bei einem solchen Flächenverhältnis eine besonders zuverlässige Verbindung des Zwischenabschnitts mit dem Schneidteil bereitgestellt werden kann.

Weiterhin ist es vorteilhaft, wenn beim Herstellen des Schneidteils der zapfenartige Vorsprung kreiszylindrisch hergestellt wird. Der Vorsprung ist dabei vorteilhafterweise an seiner Umfangsfläche glatt ausgebildet. Der Durchmesser des kreiszylindrischen Vorsprungs wird vorzugsweise so gewählt, dass dieser kleiner oder gleich dem kleinsten Innendurchmesser der napfartigen Aussparung ist. Somit kann der Vorsprung einfach in die napfartige Aussparung eingeführt werden, bevor der Fließprozess erfolgt.

Das erfindungsgemäße Verfahren sieht vor, dass beim Einpressen der napfartigen Aussparung ein Mitnahmeprofil mit Mitnahmeabschnitten in den Zwischenteil eingepresst wird. Besonders bevorzugt ist es dabei, wenn sich die Mitnahmeabschnitte nach radial innen erstrecken, sodass diese nach dem Verbinden durch Fließpressen zur Verbesserung der Drehmomentübertragung zwischen Kopfteil und Schneidteil genutzt werden können.

Das erfindungsgemäße Verfahren sieht außerdem vor, dass beim Fließpressen des zapfenartigen Vorsprungs ein Mitnahmeprofil mit Mitnahmeabschnitten an den Schneidteil angebracht wird. Besonders bevorzugt ist es dabei, wenn sich die Mitnahmeabschnitte radial nach innen erstrecken, sodass diese nach dem Verbinden durch Fließpressen zur Verbesserung der Drehmomentübertragung zwischen Zwischenteil und Schneidteil genutzt werden können.

Eine weitere vorteilhafte Weiterbildung des Verfahrens sieht vor, dass der Zwischenabschnitt und der Schneidteil vor dem Verbinden axial fluchtend angeordnet werden. Dabei kann vorgesehen sein, dass der Zwischenabschnitt und der Schneidteil beim Anordnen in einer Pressmatrize durch die Pressmatrize fluchtend angeordnet werden.

Vorteilhaft ist es ferner, wenn der Schaftabschnitt und der mit dem Schneidteil verbundene Zwischenabschnitt vor dem Verschweißen axial fluchtend angeordnet werden.

Besonders bevorzugt ist es dabei, wenn der Schaftabschnitt, der Zwischenabschnitt und der Schneidteil nach dem Verschweißen geradegewalzt werden und anschließend ein Gewinde auf den Schaftabschnitt, den Zwischenabschnitt und den Schneidteil aufgewalzt wird. Besonders bevorzugt ist es dabei, wenn durch das Gewindewalzen die Verbindung zwischen Kopfteil und Schneidteil weiter verbessert wird.

Weiterhin ist es vorteilhaft, wenn das Herstellen des Schneid- oder Zwischenteils und das Verbinden mit dem der beiden Komponenten in einer Mehrstufenpresse durchgeführt werden.

Weitere Einzelheiten und vorteilhafte Weiterbildungen der Erfindung ergeben sich aus der nachfolgenden Beschreibung, anhand derer die in den Figuren gezeigten Ausführungsformen der Erfindung näher beschrieben und erläutert sind.

Es zeigen:
Figur 1 eine erfindungsgemäße Bohrschraube;
Figur 2 einen Zwischenabschnitt für die Bohrschraube gemäß Figur 1;
Figur 3 einen Schneidteil für die Bohrschraube gemäß Figur 1;
Figur 4 einen fluchtend angeordneten Zwischenabschnitt und Schneidteil der Bohrschraube gemäß Figur 1 vor einem Fließpressprozess;
Figur 5 eine Detailansicht eines Zwischenabschnitts und eines Schneidteils zu Beginn eines Fließpressprozesses;
Figur 6 eine Detailansicht einer Fließpressverbindung nach einem Fließpressprozess;
Figur 7 eine napfartige Aussparung des Zwischenabschnitts gemäß Figur 2 und
Figuren 8 bis 13 weitere Detailansichten erfindungsgemäßer Ausführungsbeispiele.

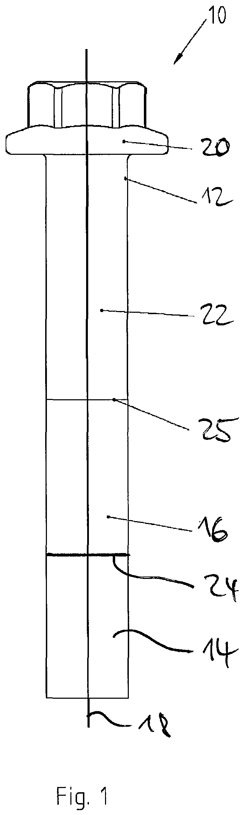

Figur 1 zeigt eine als Zweistahlschraube ausgebildete Bohrschraube 10, wobei die Bohrschraube 10 einen Kopfteil 12 und einen Schneidteil 14 aufweist. Zwischen Kopfteil 12 und Schneidteil 14 ist ein Zwischenabschnitt 16 axial fluchtend zu einer Mittellängsachse 18 der Bohrschraube angeordnet. Der Kopfteil 12 weist ferner einen Schraubenkopf 20 sowie einen Schaftabschnitt 22 auf. Der Zwischenabschnitt 16 und der Schneidteil 14 sind mittels eines Fließprozesses im Bereich eines Stoßes 24 miteinander verbunden. Der mit dem Schneidteil 14 durch Fließpressen verbundene Zwischenabschnitt 16 ist ferner mit dem Kopfteil 12 im Bereich des Schaftabschnitts 22 im Bereich eines Stoßes 25 unlösbar miteinander verbunden. Der Kopfteil 12 und der Zwischenabschnitt 16 sind aus einem Edelstahl hergestellt, wobei der Schneidteil aus einem härtbaren Werkstoff, einem Hartmetall oder einer Technischen Keramik hergestellt ist.

Da der Kopfteil 12 und der Zwischenabschnitt 16 aus einem vorzugsweise identischen Werkstoff hergestellt sind, können der Kopfteil 12 und der Zwischenabschnitt 16 im Bereich des Stoßes 25 einfach und sicher verschweißt werden.

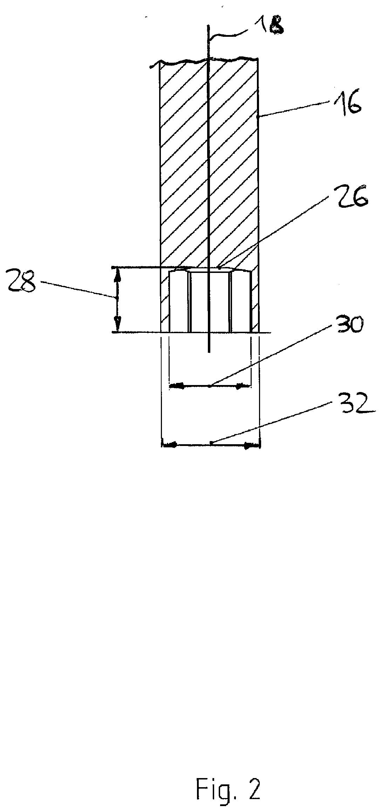

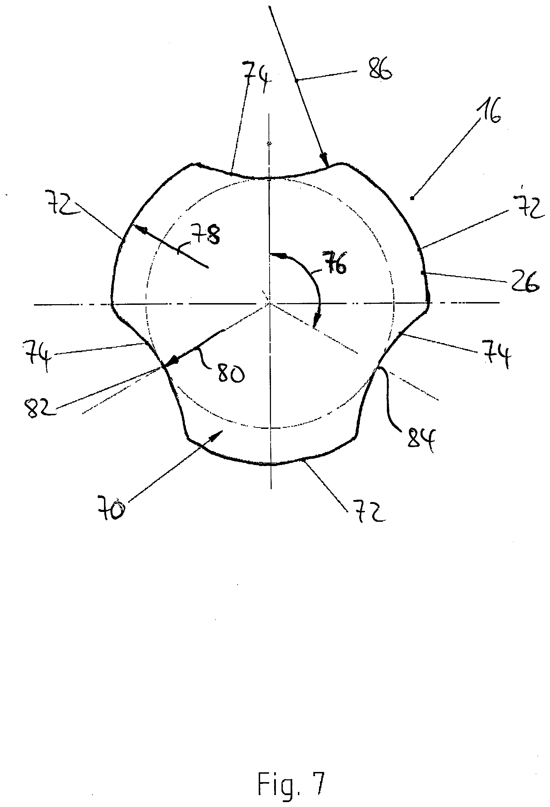

Figur 2 zeigt den Zwischenabschnitt 16 der in Figur 1 gezeigten Bohrschraube 10. Der Zwischenabschnitt 16 ist konzentrisch zur Mittellängsachse 18 angeordnet. Der Zwischenabschnitt 16 weist eine napfartige Aussparung 26 auf. Diese napfartige Aussparung 26 weist eine Tiefe 28 auf, welche sich in axialer Richtung, das heißt in Richtung der Mittellängsachse 18 erstreckt. Die napfartige Aussparung 26 weist in Figur 2 ferner einen Durchmesser 30 auf. Der Zwischenabschnitt 16 ist als Kreiszylinder ausgebildet und weist einen Durchmesser 32 auf. Die napfartige Aussparung 26 ist vorzugsweise mittels eines Pressprozesses in den Zwischenabschnitt 16 eingebracht. Vorteilhafterweise weist die napfartige Aussparung 26 ein in Figur 7 gezeigtes Mitnahmeprofil 70 auf, welches weiter unten unter Bezugnahme auf Figur 7 noch näher beschreiben und erläutert wird.

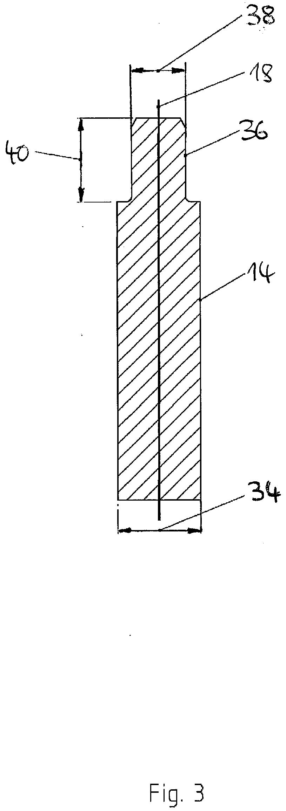

Figur 3 zeigt einen Schneidteil 14 der in Figur 1 dargestellten Bohrschraube 10. Der Schneidteil 14 weist einen Durchmesser 34 auf, welcher in etwa dem Durchmesser 32 des Zwischenabschnitts 16 entspricht. Der Schneidteil 14 weist ferner einen zapfenartigen Vorsprung 36 auf. Der zapfenartige Vorsprung 36 und der Schneidteil 14 sind konzentrisch zur Mittellängsachse 18 angeordnet. Im Bereich des zapfenartigen Vorsprungs 36 weist der Schneidteil 14 einen Durchmesser 38 auf. Ferner weist der zapfenartige Vorsprung 36 in Richtung der Mittellängsachse 18 eine Länge 40 auf.

Die Länge 40 des zapfenartigen Vorsprungs 36 ist größer als die Tiefe 28 der napfartigen Aussparung 26 des Zwischenabschnitts 16. Der Durchmesser 38 des zapfenartigen Vorsprungs 36 ist kleiner als der kleinste Durchmesser 30 der napfartigen Aussparung 26.

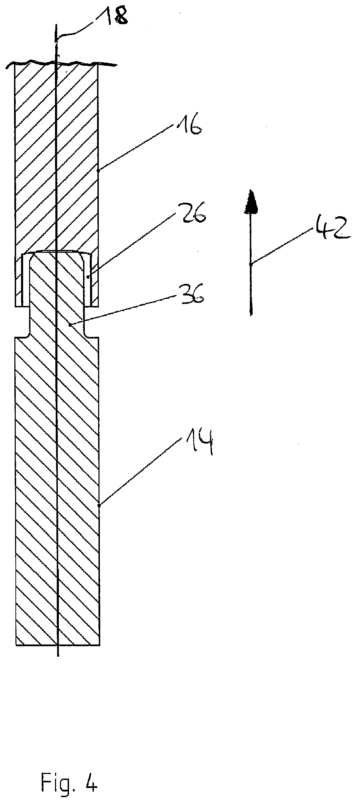

Dies ist in Figur 4 deutlich zu erkennen. Figur 4 zeigt einen Zwischenabschnitt 16 und einen Schneidteil 14, wobei der Zwischenabschnitt 16 und der Schneidteil 14 axial fluchtend zur Mittellängsachse 18 angeordnet sind. Der zapfenartige Vorsprung 36 des Schneidteils 14 ist dabei in die napfartige Aussparung 26 des Zwischenabschnitts 16 eingeschoben. Das Einschieben des zapfenartigen Vorsprungs 36 in die napfartige Aussparung 26 kann in Richtung des Pfeils 42 erfolgen. Es ist deutlich zu erkennen, dass der zapfenartige Vorsprung 36 eine größere Länge 40 aufweist, als die Tiefe 28 der napfartigen Aussparung 26. Ferner ist zu erkennen, dass die napfartige Aussparung 26 einen größeren Durchmesser 30 als der Durchmesser 38 des zapfenartigen Vorsprungs 36 aufweist. Figur 4 zeigt den Zwischenabschnitt 16 und den Schneidteil 14 dabei vor Durchführung des Fließpressprozesses.

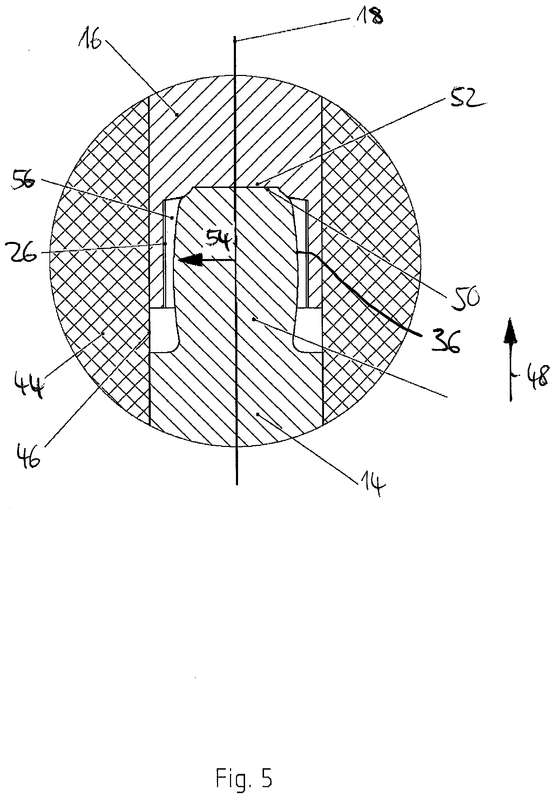

Figur 5 zeigt einen vergrößerten Ausschnitt eines Zwischenabschnitts 16, wobei in die napfartige Aussparung 26 des Zwischenabschnitts 16 der zapfenartige Vorsprung 36 des Schneidteils 14 eingeführt ist. Die beiden Teile, nämlich der Zwischenabschnitt 16 und der Schneidteil 14 sind in einer Matrize 44 einer Mehrstufenpresse angeordnet und stützen sich an einer Umfangsfläche 46 der Matrize 44 ab. Figur 5 zeigt den Zwischenabschnitt 16 und den Schneidteil 14 zu Beginn eines Fließpressprozesses. Die Wirkrichtung der Maschine ist durch den Pfeil 48 dargestellt. Wenn nun der Schneidteil 14 weiter in Richtung des Pfeiles 48 über die in Figur 4 dargestellte Position hinaus bewegt wird, dringt eine Stirnseite 50 des zapfenartigen Vorsprungs 36 in eine Bodenfläche 52 der napfartigen Aussparung 26 zumindest teilweise ein. Da ein weiteres axiales Ausweichen in Richtung des Pfeiles 48 vom Boden 52 der napfartigen Aussparung 26 begrenzt wird, kann Material des zapfenartigen Vorsprungs 36 in Richtung des Pfeiles 54 in einen Hohlraum 56 zwischen Zwischenabschnitt 16 und zapfenartigen Vorsprung 36 des Schneidteils 14 nach radial außen, das heißt quer zum Pfeil 48 fließen.

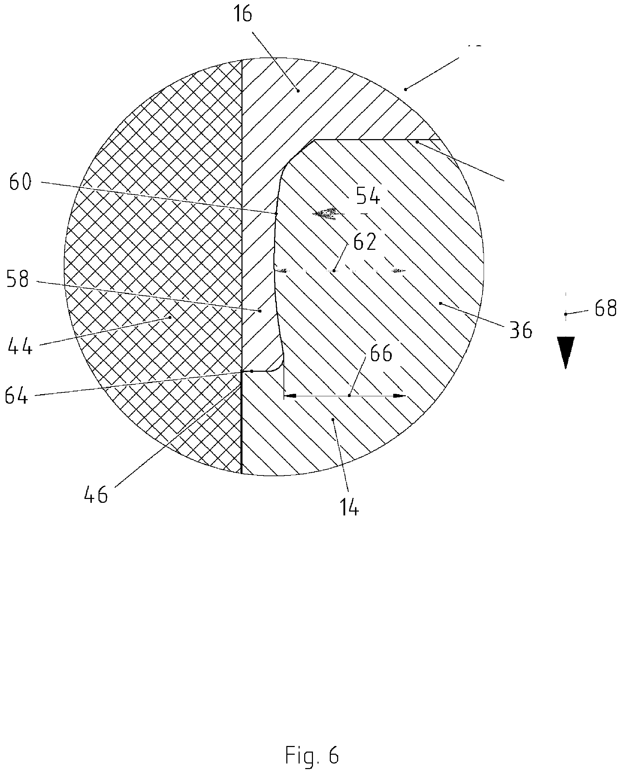

Figur 6 zeigt einen vergrößerten Ausschnitt einer Fließpressverbindung am Ende des Fließpressprozesses. Der Zwischenabschnitt 16 und der Schneidteil 14 der Bohrschraube 10 sind noch immer in der Matrize 44 einer Mehrstufenpresse angeordnet und stützen sich an der Umfangsfläche 46 der Matrize ab. Es ist deutlich zu erkennen, was der Fließprozess in Richtung des Pfeiles 54 bewirkt: Material des zapfenartigen Vorsprungs 36 kann quer zur Wirkrichtung der Presse, das heißt quer zur durch den Pfeil 48 dargestellten Richtung fließen. Das Material fließt dabei in den in Figur 5 gezeigten Hohlraum 56 ein und füllt ihn aus.

Die Bewegung einer Seitenwand 58 des Zwischenabschnitts 16, welche die napfartige Aussparung 26 bildet, wird durch die Umfangsfläche 46 der Matrize 44 begrenzt, da sich der Zwischenabschnitt 16 und der Schneidteil 14 an der Umfangsfläche 46 der Matrize 44 abstützen. Zum Ende des Fließpressprozesses füllt der zapfenartige Vorsprung 36 die napfartige Aussparung 26 vollständig aus.

Wie in Figur 6 zu erkennen ist, weist der zapfenartige Vorsprung 36 dann eine Ausbauchung 58 auf. Im Bereich dieser Ausbauchung 60 weist der zapfenartige Vorsprung 36 nach dem Fließpressprozess einen Durchmesser 62 auf. An einem Übergangsbereich 64 zum zapfenartigen Vorsprung 36 weist der zapfenartige Vorsprung 36 ferner einen Durchmesser 66 auf. Der Durchmesser 62 ist größer als der Durchmesser 66, sodass der zapfenartige Vorsprung 36 die napfartige Aussparung 26 in axialer Richtung hinterschneidet. Somit ist ein Herausziehen des zapfenartigen Vorsprungs 36 aus der napfartigen Aussparung 26 in Richtung des Pfeiles 68 nicht mehr möglich.

Da beim Herstellen von Bohrungen beziehungsweise da beim Einsatz von Bohrschrauben 10 auch hohe Drehmomente übertragen werden müssen, weist die napfartige Aussparung des Zwischenabschnitts 16 wie bereits weiter oben dargelegt ein in Figur 7 gezeigtes Mitnahmeprofil 70 auf. Das Mitnahmeprofil 70 wird von Kreisabschnitten 72 und zwischen den Kreisabschnitten 72 angeordneten Mitnahmeabschnitten 74 gebildet. In Figur 7 sind jeweils drei Kreisabschnitte 72 vorgesehen, sodass diese in einem Winkel 76 von etwa 120 Grad zueinander angeordnet sind. Im Bereich der Kreisabschnitte 72 weist die napfartige Aussparung 26 einen Radius 78 auf, welcher im Bereich der Kreisabschnitte 72 konstant ist. Im Bereich der Mitnahmeabschnitte 74 weist die napfartige Aussparung 26 ferner einen Radius 80 auf, welcher sich zur Mitte 82 der Mitnahmeabschnitte 74 stetig verringert. Dieser sich verringernde Radius 80 definiert den Abstand, welcher sich im Bereich der Mitnahmeabschnitte 74 verringert. Die Mitnahmeabschnitte 74 sind als umgekehrte Kreisabschnitte ausgebildet und können auch durch einen von außen angelegten Radius 86 definiert werden.

Wenn nun ein Schneidteil 14 beziehungsweise ein zapfenartiger Vorsprung 36 eines Schneidteils 14 in die napfartige Aussparung 26 des Zwischenabschnitts 16 für den Fließpressprozess eingeführt wird, ist es besonders bevorzugt, wenn der Durchmesser 38 des zapfenartigen Vorsprungs 36 kleiner oder gleich dem kleinsten Durchmesser 30 der napfartigen Aussparung 26 im Bereich der Mitte 82 der Mitnahmeabschnitte 74 gewählt ist, sodass der zapfenartige Vorsprung 36 problemlos in die napfartige Aussparung 26 eingeführt werden kann. Beim Fließpressprozess kann dann Material des zapfenartigen Vorsprungs 36 in die Hohlräume 56, welche durch die Kreisabschnitte 72 definiert werden, ausweichen. Aufgrund des Mitnahmeprofils 70 kann dann zusätzlich zu den Hinterschneidungen durch die Ausbauchung 60, welche eine Verbindung in axialer Richtung sicherstellt, eine Drehmomentübertragung in radialer Richtung bereitgestellt werden.

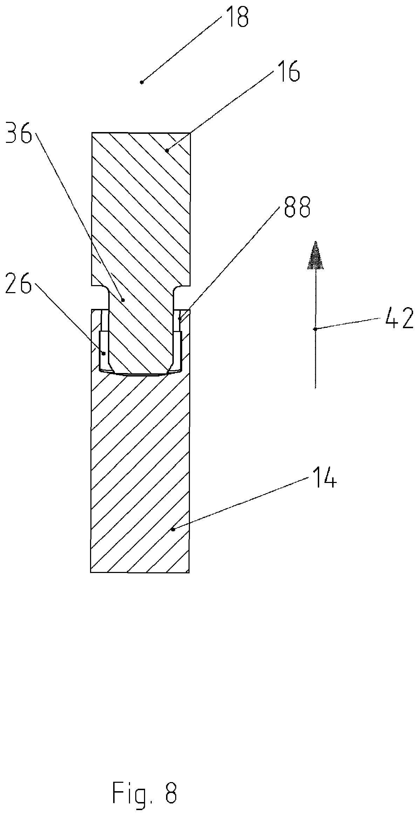

Analog zu den vorigen Erläuterungen und Figuren zeigen die Figuren 8 bis 13 die verschiedenen Ausführungen für die Fälle, in denen das Material des Schneidteils 14 nicht ausreichend umformbar ist. Die Ausformung wird in diesen Fällen fast ausschließlich durch das Zwischenteil 16 übernommen, während die Hinterschneidungen 88 und 90 am vorsprungartigen Zapfen 36 oder in der napfartigen Aussparung 26 bereits durch vorangestellte Prozesse hergestellt worden sind.

In Figur 8 ist der Fall dargestellt, dass die napfartige Aussparung 26 mit Mitnahmeprofil 70 im Schneidteil 14 eingebracht ist sowie die Hinterschneidung 88. Der vorsprungartige Zapfen 36 ist dabei kreiszylindrisch und wie vorab erläutert länger als die Tiefe der napfartigen Aussparung 26 und der Durchmesser kleiner oder gleich dem Innendurchmesser der Hinterschneidung 88.

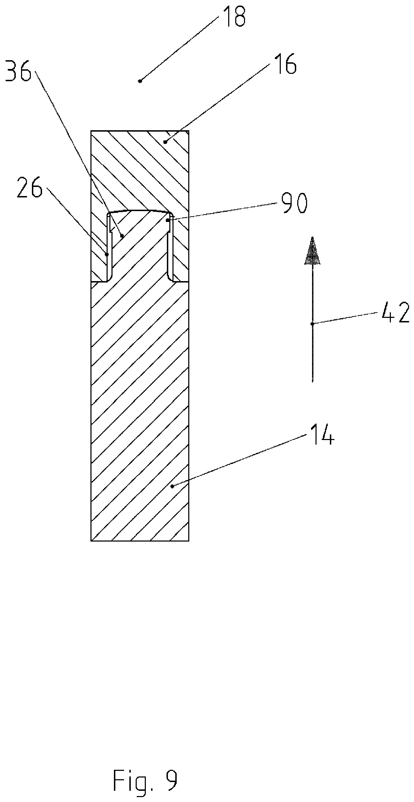

Eine Besonderheit stellt die Variante nach Figur 9 dar, da dort der Herstellprozess des Napfens des Zwischenteils 16 sowie das Verpressen von Zwischenteil 16 und des Schneidteils 14 -je nach Material des Schneidteils 14- in einem Schritt durchgeführt werden kann. Die Umformung geschieht in diesem Fall durch das Schneidteil 14. Zudem wird in dieser Variante das für die Ausbauchung benötigte zusätzliche Material durch Nachfließen aus dem oberen Bereich des Zwischenteils 16 bereitgestellt. Der zapfenartige Vorsprung 36 wird in diesem Fall bereits mit Mitnahmeprofil 70 sowie Hinterschnitt 90 in einem vorangestellten Prozess an den Schneidteil 14 angebracht.

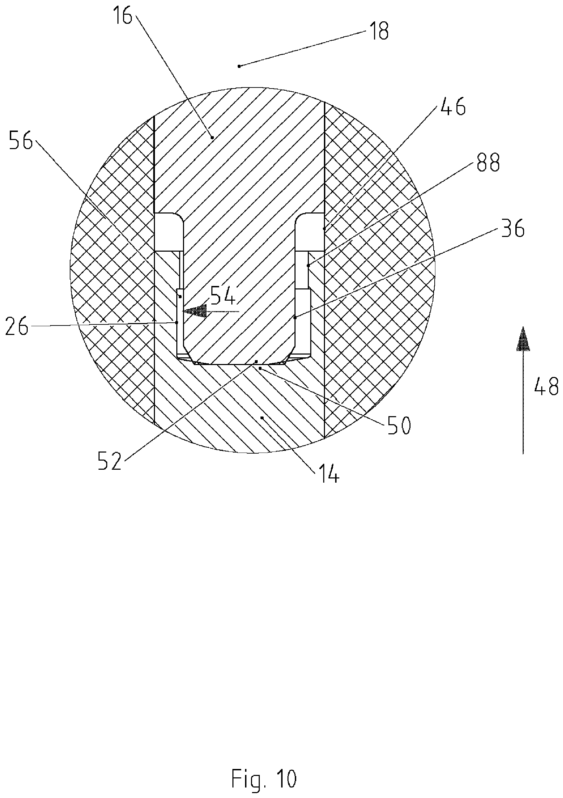

In Figur 10 ist der Fall analog zur Figur 5 dargestellt, wenn Mitnahmeprofil 70 und die Hinterschneidung 88 vorab an der napfartigen Aussparung 26 am Schneidteil 14 angebracht worden sind.

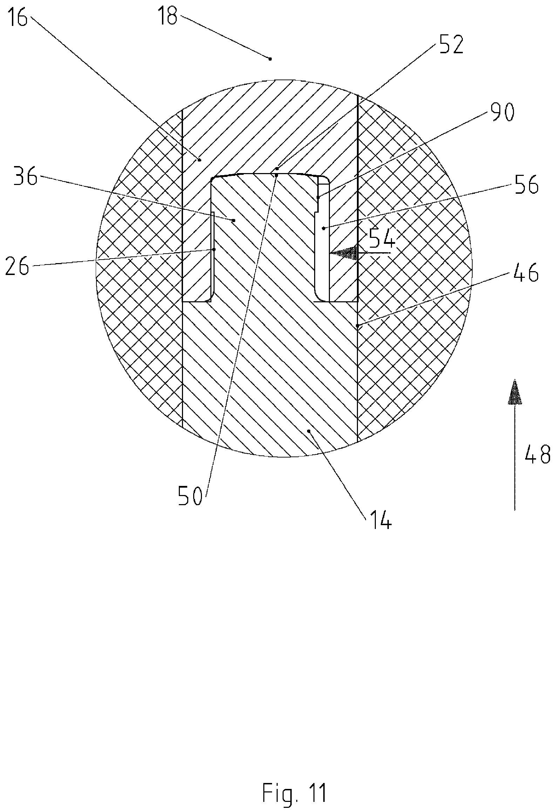

In Figur 11 ist der Fall analog zur Figur 5 dargestellt, wenn Mitnahmeprofil 70 und die Hinterschneidung 90 vorab am zapfenartigen Vorsprung 36 des Schneidteils 14 angebracht worden sind.

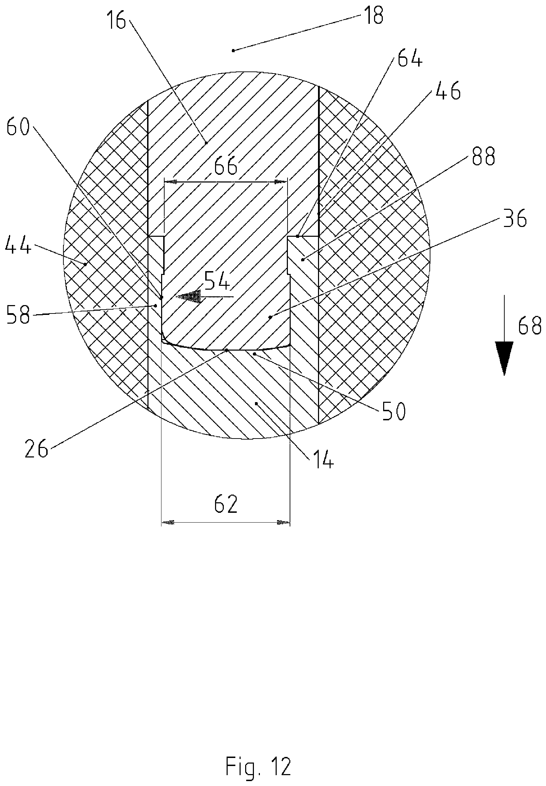

In Figur 12 ist der Fall analog zur Figur 6 dargestellt, wenn Mitnahmeprofil 70 und die Hinterschneidung 88 vorab an der napfartigen Aussparung 26 am Schneidteil 14 angebracht worden sind.

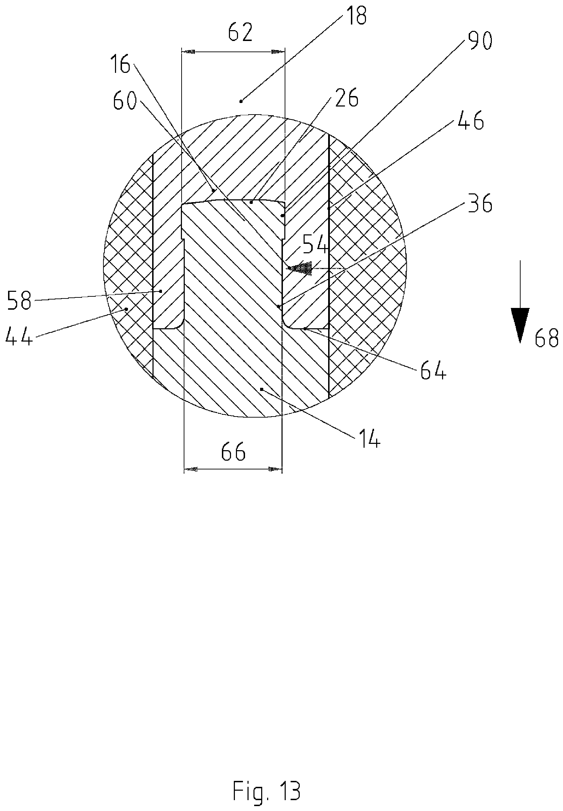

In Figur 13 ist der Fall analog zur Figur 6 dargestellt, wenn die Mitnehmergeometrie 70 und die Hinterschneidung 90 vorab am zapfenartigen Vorsprung 36 des Schneidteils 14 angebracht worden sind.

Nach dem Verbinden des Zwischenabschnitts 16 und des Schneidteils 14 durch Fließpressen wird der mit dem Schneidteil 14 verbundene Zwischenabschnitt 16 mit dem Kopfteil 12 im Bereich des Schaftabschnitts 22 verschweißt.

Da zum Fließpressen ein vergleichsweise kurzer Zwischenabschnitt 16 verwendet werden kann, kann einerseits eine sichere Verbindung zwischen Schneidteil 14 und Zwischenabschnitt 16 erreicht werden, wobei andererseits aufgrund der artgleichen Materialien von Zwischenabschnitt 16 und Kopfteil 12 eine zuverlässige Schweißverbindung zwischen dem Kopfteil 12 und dem Zwischenabschnitt 16 hergestellt werden kann. Eine Festlegung einer Schraubenlänge kann dann vorteilhafterweise durch die Festlegung der Länge des Schaftabschnitts 22 des Kopfteils 12 erfolgen.

## Patentansprüche

1. Bohrschraube (10), insbesondere Zweistahlschraube, mit einem Kopfteil (12) und mit einem Schneidteil (14), wobei der Kopfteil (12) aus einem korrosionsbeständigen Werkstoff hergestellt ist und einen Schraubenkopf (20) und einen Schaftabschnitt (22) aufweist und wobei der Schneidteil (14) aus einem härtbaren Werkstoff, einem Hartmetall oder einer Technischen Keramik hergestellt ist, **dadurch gekennzeichnet, dass** zwischen Schaftabschnitt (22) und Schneidteil (14) ein Zwischenabschnitt (16) aus einem korrosionsbeständigen Werkstoff angeordnet ist, der mit dem Schaftabschnitt (22) unlösbar verbunden wird, wobei der Schneidteil (14) einen zapfenartigen Vorsprung (36) oder eine napfartige Aussparung aufweist und wobei der Zwischenabschnitt (16) eine napfartige Aussparung (26) oder einen zapfenartigen Vorsprung aufweist, wobei die napfartige Aussparung (26) oder der zapfenartige Vorsprung im Querschnitt ein Mitnahmeprofil (70) mit mehreren Mitnahmeabschnitten (74) aufweist, wobei der zapfenartige Vorsprung (36) in der napfartigen Aussparung (26) angeordnet ist und wobei der Zwischenabschnitt (16) mit dem Schneidteil (14) mittels Fließpressen derart dauerhaft verbunden ist, dass der zapfenartige Vorsprung (36) des Schneidteils (14) den Zwischenabschnitt (16) im Bereich der napfartigen Aussparung (26) zumindest abschnittsweise axial hinterschneidet oder dass der zapfenartige Vorsprung des Zwischenabschnitts (16) den Schneidteil (14) im Bereich der napfartigen Aussparung zumindest abschnittsweise axial hinterschneidet.

2. Bohrschraube (10) nach Anspruch 1, **dadurch gekennzeichnet, dass** der zapfenartige Vorsprung (36) die napfartige Aussparung (26) vollständig ausfüllt oder die napfartige Aussparung den zapfenartigen Vorsprung vollständig umschließt.

3. Bohrschraube (10) nach Anspruch 1 oder 2, **dadurch gekennzeichnet, dass** der Schneidteil (14) gehärtet ist oder aus einem harten Werkstoff gem. Anspruch 5 besteht und eine Bohrspitze aufweist.

4. Bohrschraube (10) nach Anspruch 3, **dadurch gekennzeichnet, dass** der Schneidteil (14) eine Kernbohrung aufweist, die in der Bohrspitze mündet.

5. Bohrschraube (10) nach wenigstens einem der vorhergehenden Ansprüche, **dadurch gekennzeichnet, dass** der Schneidteil (14) aus einem Schnellarbeitsstahl (HSS), einem wärmebehandelten Stahl, einem Hartmetall oder einer Technischen Keramik hergestellt ist.

6. Bohrschraube (10) nach wenigstens einem der vorhergehenden Ansprüche, **dadurch gekennzeichnet, dass** der Kopfteil (12) und der Zwischenabschnitt (16) aus einem Edelstahl hergestellt sind.

7. Bohrschraube (10) nach wenigstens einem der vorhergehenden Ansprüche, **dadurch gekennzeichnet, dass** das Mitnahmeprofil (70) als Torx, Torx-Plus, Sechskant, Vielzahn, Verzahnung oder Kreuz ausgebildet ist.

8. Verfahren zum Herstellen einer Bohrschraube (10), insbesondere einer Zweistahlschraube, umfassend einen Kopfteil (12) aus korrosionsbeständigem Werkstoff, der einen Schraubenkopf (20) und einen Schaftabschnitt (22) aufweist, einen Schneidteil (14) aus einem härtbaren oder harten Werkstoff und einen zwischen Schaftabschnitt (22) und Schneidteil (14) angeordneten Zwischenabschnitt (16) aus einem korrosionsbeständigen Werkstoff umfassend die folgenden Schritte:
- Einpressen einer napfartigen Aussparung (26) mit einer vorgegebenen Tiefe (28) in den Zwischenabschnitt (16) oder Anformen eines zapfenartigen Vorsprungs mit einer vorgegebenen Länge an den Zwischenabschnitt (16);
- Herstellen des Schneidteils (14) mit einem zapfenartigen Vorsprung (36) oder Einpressen einer napfartigen Aussparung in den Schneidteil (14); wobei beim Einpressen der napfartigen Aussparung (26) oder beim Anformen des zapfenartigen Vorsprungs (36) im Querschnitt ein Mitnahmeprofil (70) mit Mitnahmeabschnitten ein- oder angepresst wird;
- Einführen des Vorsprungs (36) in die Aussparung (26) und Verbinden des Zwischenabschnitts (16) und des Schneidteils (14) mittels Fließpressen, so dass der zapfenartige Vorsprung (36) die napfartige Aussparung (26) vollständig ausformt oder der zapfenartige Vorsprung (36) vollständig von der napfartigen Aussparung (26) umschlossen wird;
- Verschweißen des Schaftabschnitts (22) und des mit dem Schneidteil (14) verbundenen Zwischenabschnitts (16).

9. Verfahren nach Anspruch 8, **dadurch gekennzeichnet, dass** die napfartige Aussparung (26) in einem Flächenverhältnis von etwa 20 % bis etwa 75 % zu einer Querschnittsfläche des Zwischenabschnitts (16) in den Zwischenabschnitt (16) oder in den Schneidteil (14) eingepresst wird.

10. Verfahren nach Anspruch 8 oder 9, **dadurch gekennzeichnet, dass** der zapfenartige Vorsprung (36) kreiszylindrisch oder mit einem Mitnahmeprofil (70) hergestellt wird.

11. Verfahren nach wenigstens einem der Ansprüche 8 bis 10, **dadurch gekennzeichnet, dass** der Zwischenabschnitt (16) und der Schneidteil (14) vor dem Verbinden axial fluchtend angeordnet werden.

12. Verfahren nach wenigstens einem der Ansprüche 8 bis 11, **dadurch gekennzeichnet, dass** der Schaftabschnitt (22) und der mit dem Schneidteil (14) verbundene Zwischenabschnitt (16) vor dem Verschweißen axial fluchtend angeordnet werden.

13. Verfahren nach wenigstens einem der Ansprüche 8 bis 12, **dadurch gekennzeichnet, dass** der Schaftabschnitt (22), der Zwischenabschnitt (16) und der Schneidteil (14) nach dem Verschweißen geradegewalzt werden und anschließend ein Gewinde auf den Schaftabschnitt (22), den Zwischenabschnitt (16) und den Schneidteil (14) aufgewalzt wird.

14. Verfahren nach wenigstens einem der Ansprüche 8 bis 13, **dadurch gekennzeichnet, dass** das Herstellen des Schneidteils (14) oder das Herstellen des Zwischenabschnitts (16) und das Verbinden mit dem Zwischenabschnitt (16) oder Schneidteil (14) in einer Mehrstufenpresse durchgeführt werden.

## Claims

1. A drilling screw (10), particularly a two-component steel screw, having a head part (12) and a cutting part (14), wherein the head part (12) is made of a corrosion-resistant material and comprises a screw head (20) and a shank section (22), and wherein the cutting part (14) is made of a hardenable material, a cemented carbide, or a technical ceramic, **characterized in that** an intermediate section (16) made of a corrosion-resistant material is disposed between the shank section (22) and the cutting part (14), which intermediate section is non-releasably connected to the shank section (22), wherein the cutting part (14) comprises a peg-like projection (36) or a cup-like recess and wherein the intermediate section (16) comprises a cup-like recess (26) or a peg-like projection, wherein the cup-like recess (26) or the peg-like projection has in its cross section an engagement profile (70) with multiple engagement sections (74), wherein said peg-like projection (36) is disposed in the cup-like recess (26) and wherein said intermediate section (16) is permanently connected to the cutting part (14) by means of impact extrusion, such that the peg-like projection (36) of the cutting part (14) axially undercuts at least sections of the intermediate section (16) in the region of the cup-like recess (26) or such that the peg-like projection of the intermediate section (16) axially undercuts at least sections of the cutting part (14) in the region of the cup-like recess.

2. The drilling screw (10) according to claim 1, **characterized in that** the peg-like projection (36) completely fills the cup-like recess (26) or the cup-like recess completely encompasses the peg-like projection.

3. The drilling screw (10) according to claim 1 or 2, **characterized in that** the cutting part (14) is hardened or consists of a hard material according to claim 5 and comprises a drill tip.

4. The drilling screw (10) according to claim 3, **characterized in that** the cutting part (14) comprises a core hole, which leads into the drill tip.

5. The drilling screw (10) according to at least one of the preceding claims, **characterized in that** the cutting part (14) is made of a high-speed steel (HSS), a heat-treated steel, a cemented carbide, or a technical ceramic.

6. The drilling screw (10) according to at least one of the preceding claims, **characterized in that** the head part (12) and the intermediate section (16) are made of a stainless steel.

7. The drilling screw (10) according to at least one of the preceding claims, **characterized in that** the engagement profile (70) is designed as a Torx, Torx plus, hexagon, multi-tooth, gearing, or cross.

8. A method for manufacturing a drilling screw (10), particularly a two-component steel screw, comprising a head part (12) made of a corrosion-resistant material and having a screw head (20) and a shank section (22), a cutting part (14) made of a hardenable or hard material, and an intermediate section (16) made of a corrosion-resistant material and disposed between the shank section (22) and the cutting part (14), the method including the following steps:
- Pressing a cup-like recess (26) of a predetermined depth (28) into the intermediate section (16) or molding a peg-like projection of a predetermined length onto the intermediate section (16);
- Producing the cutting part (14) with a peg-like projection (36) or pressing in a cup-like recess into the cutting part (14); wherein in its cross-section an engagement profile (70) with engagement sections is pressed in or molded on during pressing in the cup-like recess (26) or the peg-like projection (36);
- Inserting the projection (36) into the recess (26) and connecting the intermediate section (16) and the cutting part (14) by means of impact extrusion, such that the peg-like projection (36) completely fills out the cup-like recess (26) or the peg-like projection (36) is completely encompassed by the cup-like recess (26);
- Welding together the shank section (22) and the intermediate section (16) connected to the cutting part (14) .

9. The method according to claim 8, **characterized in that** the cup-like recess (26) is pressed into the intermediate section (16) or into the cutting part (14) at an area ratio of about 20% to about 75% relative to the cross-sectional area of the intermediate section (16).

10. The method according to claim 8 or 9, **characterized in that** the peg-like projection (36) is produced in a circular cylindrical shape or with an engagement profile (70) .

11. The method according to at least one of claims 8 to 10, **characterized in that** the intermediate section (16) and the cutting part (14) are brought into axial alignment before being connected.

12. The method according to at least one of claims 8 to 11, **characterized in that** the shank section (22) and the intermediate section (16) which is connected to the cutting part (14) are brought into axial alignment before being welded.

13. The method according to at least one of claims 8 to 12, **characterized in that** the shank section (22), the intermediate section (16), and the cutting part (14) are rolled straight after welding and a thread is then rolled onto the shank section (22), the intermediate section (16), and the cutting part (14).

14. The method according to at least one of claims 8 to 13, **characterized in that** manufacturing the cutting part (14) or manufacturing the intermediate section (16) and connecting with the intermediate section (16) or cutting part (14) are performed in a multi-stage press.

## Revendications

1. Vis-foret (10), en particulier vis composée de deux aciers, avec une partie tête (12) et avec une partie tranchant (14), dans laquelle la partie tête (12) est fabriquée à partir d'un matériau résistant à la corrosion et présente une tête de vis (20) et une section tige (22) et dans laquelle la partie tranchant (14) est fabriquée à partir d'un matériau durcissable, d'un métal dur ou d'une céramique technique, **caractérisée en ce qu'**une section intermédiaire (16) composée d'un matériau résistant à la corrosion, qui est reliée de manière inamovible à la section tige (22), est disposée entre la section tige (22) et la partie tranchant (14), dans laquelle la partie tranchant (14) présente une partie saillante conique (36) ou un évidement cupuliforme et dans laquelle la section intermédiaire (16) présente un évidement cupuliforme (26) ou une partie saillante conique, dans laquelle l'évidement cupuliforme (26) ou la partie saillante conique présente en coupe transversale un profil d'entraînement (70) avec plusieurs sections d'entraînement (74), dans laquelle la partie saillante conique (36) est disposée dans l'évidement cupuliforme (26) et dans laquelle la section intermédiaire (16) est reliée de manière permanente à la partie tranchant (14) par extrusion, de telle sorte que la partie saillante conique (36) de la partie tranchant (14) crée axialement au moins sur certaines sections un dégagement sur la section intermédiaire (16) dans la zone de l'évidement cupuliforme (26) ou que la partie saillante conique de la section intermédiaire (16) crée axialement au moins sur certaines sections un dégagement sur la partie tranchant (14) dans la zone de l'évidement cupuliforme.

2. Vis-foret (10) selon la revendication 1, **caractérisée en ce que** la partie saillante conique (36) remplit entièrement l'évidement cupuliforme (26) ou l'évidement cupuliforme entoure entièrement la partie saillante conique.

3. Vis-foret (10) selon la revendication 1 ou 2, **caractérisée en ce que** la partie tranchant (14) est durcie ou est constituée d'un matériau dur selon la revendication 5 et présente une pointe de forage.

4. Vis-foret (10) selon la revendication 3, **caractérisée en ce que** la partie tranchant (14) présente un avant-trou, qui débouche dans la pointe de forage.

5. Vis-foret (10) selon au moins l'une des revendications précédentes, **caractérisée en ce que** la partie tranchant (14) est fabriquée à partir d'un acier rapide (HSS), d'un acier traité thermiquement, d'un métal dur ou d'une céramique technique.

6. Vis-foret (10) selon au moins l'une des revendications précédentes, **caractérisée en ce que** la partie tête (12) et la section intermédiaire (16) sont fabriquées à partir d'un acier inoxydable.

7. Vis-foret (10) selon au moins l'une des revendications précédentes, **caractérisée en ce que** le profil d'entraînement (70) est réalisé sous la forme d'une empreinte Torx, Torx-Plus, hexagonale, à tête polygonale, à denture ou cruciforme.

8. Procédé de fabrication d'une vis-foret (10), en particulier d'une vis composée de deux aciers, comprenant une partie tête (12) composée d'un matériau résistant à la corrosion, qui présente une tête de vis (20) et une section tige (22), une partie tranchant (14) composée d'un matériau durcissable ou dur et une section intermédiaire (16), disposée entre la section tige (22) et la partie tranchant (14), composée d'un matériau résistant à la corrosion comprenant les étapes suivantes:
- l'enfoncement d'un évidement cupuliforme (26) avec une profondeur (28) prédéfinie dans la section intermédiaire (16) ou le formage d'une partie saillante conique avec une longueur prédéfinie sur la section intermédiaire (16);
- la fabrication de la partie tranchant (14) avec une partie saillante conique (36) ou l'enfoncement d'un évidement cupuliforme dans la partie tranchant (14); dans lequel, lors de l'enfoncement de l'évidement cupuliforme (26) ou lors du formage de la partie saillante conique (36) un profil d'entraînement (70) avec des sections d'entraînement est enfoncé ou pressé en section transversale;
- l'introduction de la partie saillante (36) dans l'évidement (26) et la liaison de la section intermédiaire (16) et de la partie tranchant (14) par extrusion, de sorte que la partie saillante conique (36) complète entièrement l'évidement cupuliforme (26) ou la partie saillante conique (36) est entièrement entourée par l'évidement cupuliforme (26);
- le soudage de la section tige (22) et de la section intermédiaire (16) reliée à la partie tranchant (14).

9. Procédé selon la revendication 8, **caractérisé en ce que** l'évidement cupuliforme (26) est enfoncé dans la section intermédiaire (16) ou dans la partie tranchant (14) dans un rapport de surface de sensiblement 20 % à sensiblement 75 % par rapport à une surface de section transversale de la section intermédiaire (16).

10. Procédé selon la revendication 8 ou 9, **caractérisé en ce que** la partie saillante conique (36) est fabriquée de manière cylindrique circulaire ou avec un profil d'entraînement (70).

11. Procédé selon au moins l'une des revendications 8 à 10, **caractérisé en ce que** la section intermédiaire (16) et la partie tranchant (14) sont disposées en alignement axial avant la liaison.

12. Procédé selon au moins l'une des revendications 8 à 11, **caractérisé en ce que** la section tige (22) et la section intermédiaire (16) reliée à la partie tranchant (14) sont disposées en alignement axial avant le soudage.

13. Procédé selon au moins l'une des revendications 8 à 12, **caractérisé en ce que** la section tige (22), la section intermédiaire (16) et la partie tranchant (14) sont laminées de manière rectiligne après le soudage et ensuite un filet est appliqué par laminage sur la section tige (22), la section intermédiaire (16) et la partie tranchant (14).

14. Procédé selon au moins l'une des revendications 8 à 13, **caractérisé en ce que** la fabrication de la partie tranchant (14) ou la fabrication de la section intermédiaire (16) et la liaison à la section intermédiaire (16) ou partie tranchant (14) sont réalisées dans une presse à étages multiples.
